# EUROPEAN PATENT APPLICATION

(11) **EP 0 978 747 A1**
(43) Date of publication of application: **09.02.2000**
(21) Application number: 98500186.6
(22) Date of filing: 03.08.1998
(51) Int. Cl.: G02B 23/18

(54) **New ergonomic binoculars with zoom**

(71) Applicant: Sanju CO., LTD., Sanju B/D, Seoul (KR)
(72) Inventor: Ok-Soo, Kim, Sanju B/D 1542-5, Seocho-ku, Seoul (KR)
(74) Representative: Isern Jara, Nuria

(57) **Abstract**

Binoculars made up of two cast aluminium bodies, equipped with respective sets of lenses, among which may be emphasized 21- millimetre objectives (5L), which allow an embodiment of small size and an optimalization of the unit's weight and size. Both bodies are connected to an axis joint for adjusting the distance between the user's eyes. A wheel in the axis joint allows accurate focusing. In one of the blocks, preferably the right-hand one, there is a lever for adjusting the zoom according to a range of pre-set magnifications. Each eyepiece is enclosed in a rubber protector that also improves tactile sensation and manageability. By turning an eyepiece, specifically the right-hand one, the dioptric scale may be adjusted.

## Description

### Object of the Invention

The present invention refers to binoculars, specifically binoculars with a zoom device, equipped with 21-millimetre objectives and two bodies jointed together, made of cast aluminium that enables them to adopt an ergonomic outer shape, with a new design and characteristics of size and weight that make them much more manageable than those previously known in the state of the art.

The field of application of the present invention falls within the industry dedicated to the manufacture of optical articles and devices of the type mentioned.

### Background of the Invention

In the present state of the art different types of binoculars are known that are equipped with zoom devices for bringing closer or distancing the object to be viewed, which are provided with objectives of greater diameter and bodies that are made up of multiple parts which are normally made of less compact materials than those used in the binoculars proposed by the invention, and which have drawbacks arising from their inferior mechanization or their greater weight. One of the problems associated with binoculars of this type consists precisely of the fact that the size of the objectives determines to a great extent the final volume of the unit, in detriment to the use and manageability of the same.

Moreover, in the manufacture of this type of binoculars the characteristics of the material and the number of parts used in manufacturing the respective bodies decisively affects manufacturing costs and makes the free selection of design shapes difficult.

Therefore, we consider that there is a need for providing binoculars of the type mentioned, that is, provided with a zoom device, the design of which is more compact than that of currently existing binoculars, with a substantial improvement in ergonomic shape and, at the same time, having a size and weight sufficiently small so as to be handled and/or carried with less effort and greater facility.

### Summary of the Invention

The invention refers, specifically, to an optical instrument for viewing distant objects, made up of two bodies made of two pieces of cast aluminium. Each of these bodies has a set of optical lenses, among which may be emphasised the two said 21-millimetre objectives, the incorporation of which is really innovative. These objectives, by virtue of their small size, allow the volume of the unit to be considerably reduced. The use of cast aluminium in the manufacture of the said bodies allow it to be given an ergonomic design and a compactness that increases its strength and allows it to be mass produced, thus saving production costs.

The two said bodies are jointed together with the help of an axis that is parallel to and equidistant from the viewing axes. This allows the distance between the eyepieces to be adjusted to coincide with the distance between the user's pupils. The said bodies are partly covered by means of coatings of plastic material with a warped surface which has certain protuberances forming hollows that improve and enhance the characteristics of manageability of the same and also the genera] aesthetic of the unit.

In the axis joint between the bodies a wheel is to be attached, preferably made of plastic material, provided with anti-slip grooves on the surface. This wheel is in a very comfortable position for the user and allows comfortable and accurate focussing by means of turning with the index finger.

In the outermost part of the bodies, at both sides of the unit, there are attachment rings for anchoring any type of appropriate means, such as a cord, a spring clip, or any other similar means, for ensuring safe and comfortable transport.

Moreover, on the lower side of one of the bodies, preferably on the right-hand body, next to the eyepiece, there is to be a lever, preferably made of plastic, provided with anti-slip grooves, which allows the zoom device to be adjusted. Owing to its position, it may be operated easily by the user's thumb without the need to remove one's eyes from the objective; and by means of this device the image may be magnified in the proportions previously established. In accordance with the preferred embodiment of the invention, such magnifications may be included in the range from about 7X to about 21X.

As regards the said eyepieces, each of these is enclosed in a suitable protector, preferably made of rubber or the like, with anti-slip grooves on its outer surface, and with a perforated disk inside. These protectors provide perfect protection against knocks and environmental agents, and at the same time improve the tactile sensation and manageability of the eyepiece.

In accordance with the preferred embodiment, turning one of the eyepieces, preferably the right-hand eyepiece, allows the dioptric scale to be adjusted, thus eliminating the possible unfocussing that there might be with respect to the set of lenses of the other eyepiece, preferably the left-hand one, in a simple, fast and effective way.

### Brief Description of the Drawings

Other characteristics and advantages of the invention will be clear from the detailed description that follows from a preferred embodiment of the invention, to be taken as an illustrative and non-restrictive example with reference to the drawings that accompany it, in which:
Figure 1 represents front, bottom and left side views of binoculars in accordance with the preferred embodiment of the invention;
Figure 2 shows rear and top views of the same object as Figure 1;
Figure 3 is a detail of the position of the axes, as well as a detail of the position of the lenses in accordance with the preferred embodiment of the invention, and
Figure 4 shows a diagramatic view, in perspective, of different parts built in accordance with the preferred embodiment of the invention.

### Description of the Preferred Embodiment

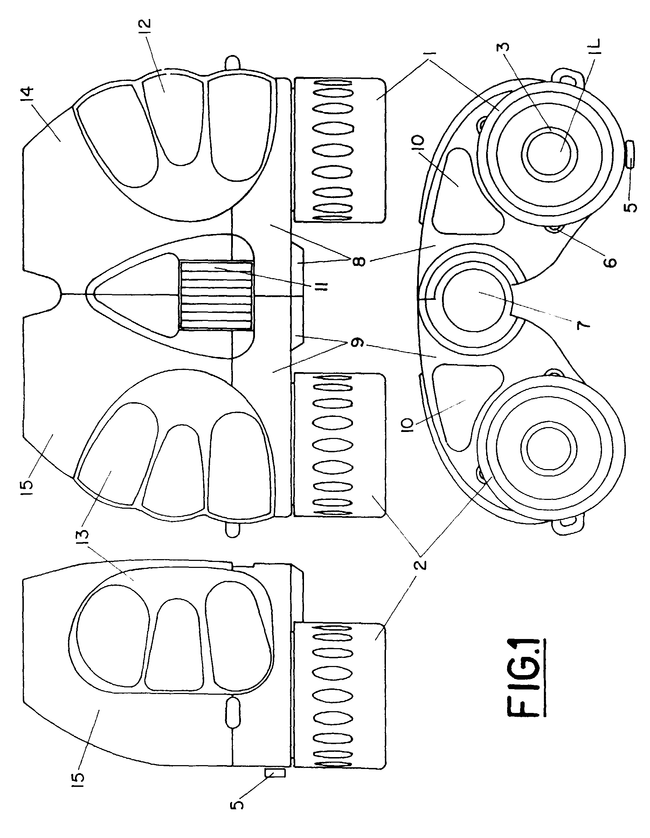

To carry out the detailed description of the preferred embodiment of the invention constant reference will be made to the Figures of the drawings, in which the same numerical references have been used to designate parts that are the same or similar. Thus, firstly, in respect of Figure 1, one may observe a representation of the binoculars that are the object of the invention, according to different views, in which two protective rubber drums are shown, one of which, corresponding to the right-hand side, is referred to by (1), and the other, corresponding to the left-hand side, by (2). One may also observe the two lower parts of the blocks (8, 9) of the left and right-hand sides respectively, a central focussing wheel (11), the two plastic, ergonomic coverings (12, 13) of both the right and left-hand sides respectively, and the two casings (14, 15) of the upper parts of the blocks of both sides.

In the bottom view that appears in this same Figure, other elements may be distinguished, such as the lenses (1L), two holders (3) for the said lenses (1L), two protective drums (1, 2) made of rubber or the like for both sides, the decorative side rings (10), the central decorative ring (7), the lower parts of the blocks (8, 9) of both sides, and the head of the lever of the zoom's rotating drum (5).

In accordance with the side view that also appears in this Figure, one may observe the casing of the upper part of the left-hand drum (15), the ergonomic covering (13) of the same side, and the head of the lever of the rotating drum for operating the zoom (5).

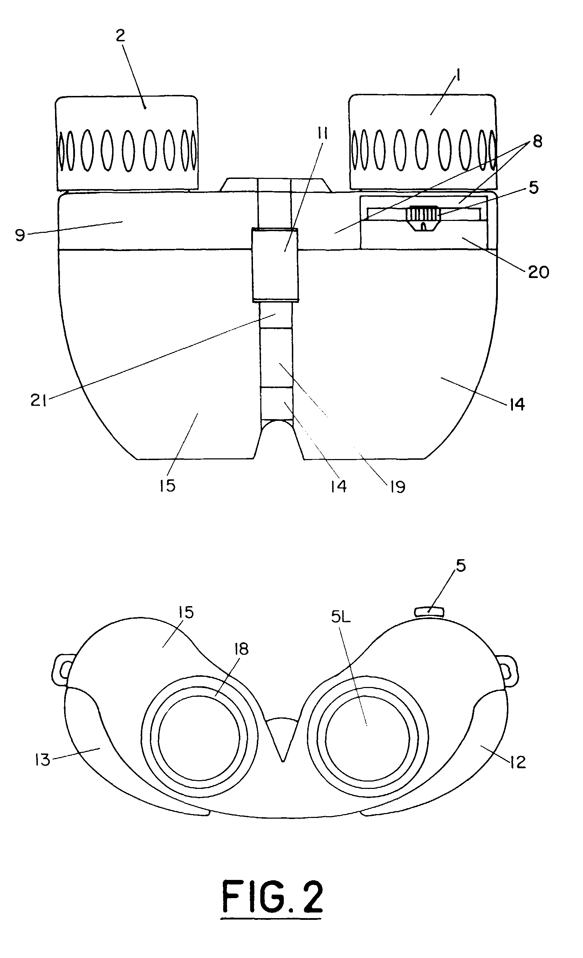

Figure 2 shows a rear view and a top view of the same object as in Figure 1. The rear view shows the two casings of the upper parts of the blocks (14, 15) of both sides, the head of the lever of the zoom's rotating drum (5), the lower parts of the blocks (8, 9) of both sides, the central focussing wheel (11), the two aluminium upper parts (19, 21) of the blocks of both sides, the supporting plate (20) of the right-hand zoom system, and the two protective drums (1, 2) mentioned above.

The top view shows the two 21-millimetre objectives (5L), two holders (18) for the said objectives (5L), the two casings of the upper parts of the blocks (14, 15) of both sides, the ergonomic coverings (12, 13), also of both sides, and the head of the lever of the zoom's rotating drum (5).

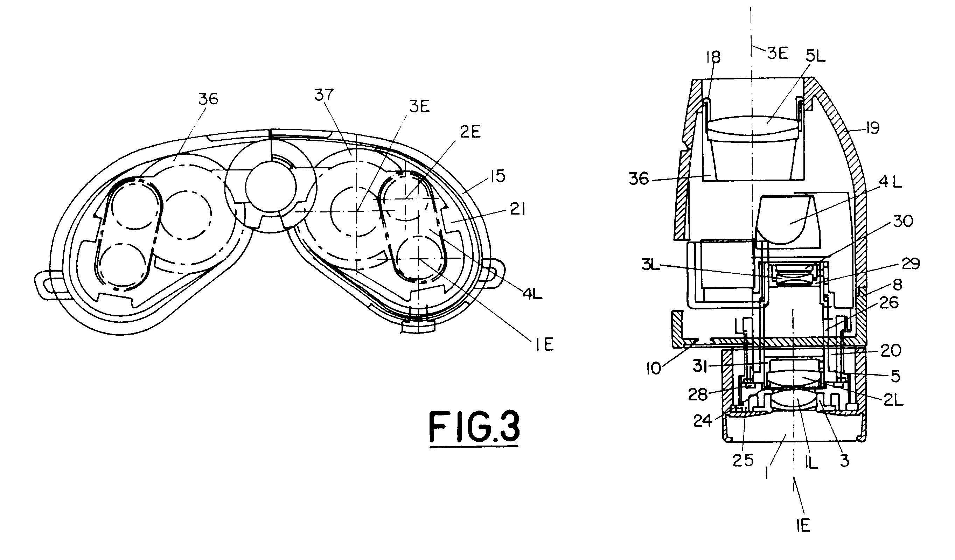

To continue with the foregoing description, Figure 3 shows a detail of the support of the axes, in which one may observe the user's viewing axis (1E), the axis (2E) of coincidence of the prisms, the axis (3E) of the objective, the casing of the upper part of the left-hand block (15), the upper part of the left-hand blocks (21), a prism (4L), and the two supporting drums (36, 37) of the objectives of both the right and left-hand sides respectively.

Likewise, in the said Figure 3 one may observe a detail of the position of the lenses, in which appear the lenses (1L, 2L, 3L), the prism (4L), the objective (5L), the holder (18) of the right-hand objective (5L), the drum (36) supporting the right-hand objective, the holder (30) of the lens (3L), the drum (29) of the lens (3L), the right-hand desmodromic drum (26) of the zoom, the supporting plate (20) of the right-hand zoom system, the aluminium upper right-hand part of the block (19), the lower right-hand part of the block (8), the zoom's rotating drum (5), the supporting drum (31) of the lens (2L), the inner lining with outer spiral relief of the lower right-hand block (28), the holder (24) of the lens (2L), the drum of the right-hand eyepiece (25), the holder (3) of the lens (1L), the protective right-hand drum (3), the lower decorative side ring (10), the axis (1E), and the supporting drum (36) of the right-hand objective.

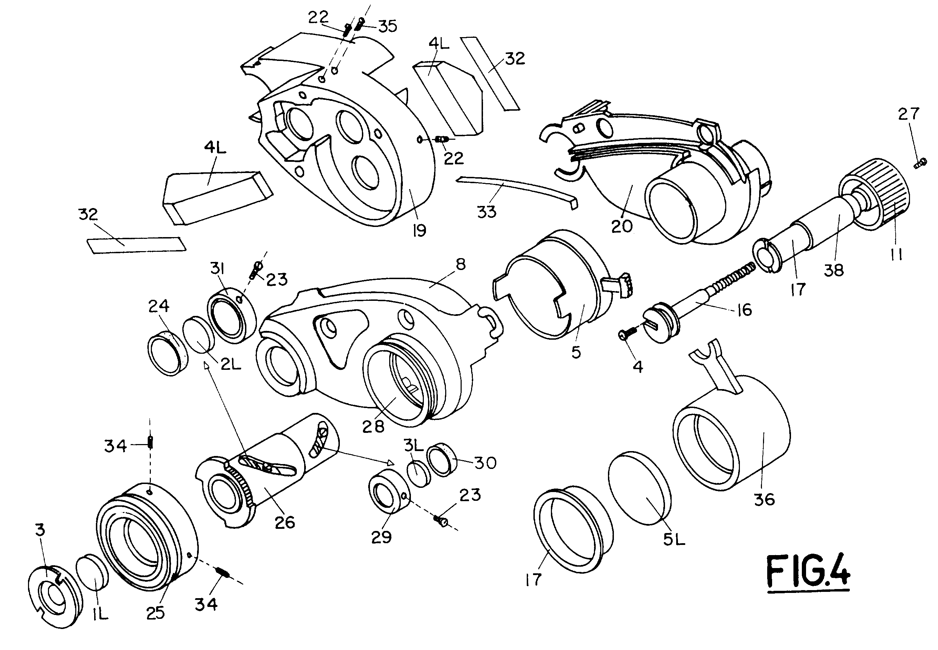

Finally, Figure 4 shows a diagramatic view, in perspective, of the metallic strips that support the prisms (32), the aluminium upper right-hand part of the block (19), the headless screws for graduating the prisms (22), the metallic transmission strip for turning the zoom (33), the supporting plate (20) of the right-hand zoom system, the drum (31) supporting the lens (2L), the holder (24) of the lens (2L), the lenses (1L, 2L, 3L), the optical prism (4L) and the objective (5L), the holder (30) of the lens (3L), the supporting drum (29) of the lens (3L), the screws of the desmodromic drum channel of (23) the zoom, the holder (3) of the lens (1L), the drum of the right-hand eyepiece (25), the drum adjustment screw (34), the right-hand desmodromic drum (26) of the zoom, the inner lining (28) with outer spiral relief of the lower right-hand block, the lower right-hand part of the block (8), the right-hand rotating drum of the zoom (5), the holder (18) of the objective (5L), the axis (1E) and the right-hand supporting drum (36) of the objective, the adjustment screw of the drums of the objectives (4), the focus movement rod (16), the focus drum (17), the joint cylinder (38), the central focusing wheel (11), the fastening screw (27) of the focusing bar, and the screw (35) anchoring the casing to the body.

In the foregoing a description has been given of the different pieces and parts that are represented in each of the Figures of the drawings, in accordance with the preferred embodiment of the invention. From these figures it may be deduced that the binoculars are made up of two well-differentiated optical systems, one on each side, which are jointed together by means of an axis that is equidistant from and parallel to the axes of the objectives, and is on a plane parallel to the plane containing the said latter axes and at a variable distance that allows the distance between the lenses (1L) to be adjusted in order to adapt them to the distance between the user's pupils.

The connection in the axis joint is achieved by means of different parts, of which some are strong, such as the hollow cylindrically shaped extensions of the upper parts of the block (19) which are connected by the penetration of the joint cylinder (38) allowing the joint to turn and other parts are not strong, such as the extensions of the lower parts of the blocks (8), the left-hand one of which has a decorative side ring (10), the extensions of the plastic supporting plates of the zoom system (20), which have projections for housing the strip (33) that communicates movement to the rotating drums of the zoom, and the extensions of the drums that support the objectives (36). All of these rotations cover an angle of, preferably, about 30 degrees.

The focusing system transmits the rotatory movement applied by the user to the central wheel (11) to the focusing drum (17), which is connected to the former by a screw. The focusing drum has an inner spiral screw and is penetrated lengthwise by the focusing rod (16), which has a spiral screw but which, as it cannot turn because it is anchored by means of a screw (4) to the drum supporting the left-hand objective (36), converts the rotatory movement into a rectilinear movement in the direction of the axis joint. This movement is transmitted to the drums supporting the objectives and through these to the 21-millimetre objectives (5L), allowing the user to focus the binoculars correctly.

The zoom system is made up of two sets of lenses, each of which incorporates two lenses. As regards the set of lenses of the right-hand side, in Figure 4 one may observe the lens (2L) housed inside the drum (31) and held in place by means of the holder (30). Both drums may slide freely inside the desmodromic drum (26) and have several screws (23) which penetrate the channels in the walls of the desmodromic drum (26) with their heads inside the channel of the cylindrical extension of the supporting plate of the zoom system (20). The desmodromic drum and the cylindrical extension of the plate are enclosed, in turn, by the zoom's rotatory drum (5), which is operated by the user by means of the external lever, and which transmits a rotatory movement, by means of projections with inner teeth, to the outer toothed part of the desmodromic drum (26). As the channel of the zoom system's (20) supporting plate is immobile, the screws threaded in the drums of the lenses (23), which have their heads inside the channel, move lengthwise, pushed by the walls of the channels in the desmodromic drum, bringing the lenses (2L, 3L) closer or distancing them, according to the direction of rotation. The right-hand rotation drum of the zoom is connected to the left-hand drum by means of a metallic strip (33), with its ends partly embedded in the drums. The strip is housed in projections on the zoom system's (20) supporting plates and these projections penetrate the axis joint. The metallic strip transmits the movement between the rotatory drums in such a way that they rotate simultaneously, equalizing the zoom effect for both eyes. Therefore, the zoom's left-hand rotatory drum has no operating lever, and the lower left-hand part of the block has no opening for the same.

In the inner part of the cylindrical extension of the lower right-hand part of the block (8) there is a cover with a wide-aperture thread which, when turned, causes it to slowly leave or enter its housing. The drum of the right-hand eyepiece (25) is anchored to the said cover by means of three headless screws (34), and threaded into this drum there is a holder (3) which holds the lens (1L) in its interior. The right-hand protective rubber drum encloses this entire unit and is attached by pressure. This drum is different from the left-hand one in that it has an outer projection for the adjustment indicator of the focus centring because, as explained above, when the right-hand protective drum is rotated the right-hand lens (1L) moves in the same direction as the user's viewing axis, on a parallel plane to the left-hand lens, which is immobile, allowing the user to centre the focus. As the left-hand lens is immobile and therefore does not have this rotation system, the cylindrical extension of the lower part of the left-hand block is longer, does not have an inner cover, and the drum of the eyepiece is made up of a simple cap, preferably made of plastic, threaded on the cylindrical extension of the lower part of the left-hand block.

Inside each of the aluminium upper parts of the blocks (19 and 21), two optical prisms are situated that allow light rays to change direction from the axis of the objectives to the user's viewing axis. The said prisms are attached to the inner wall of the aluminium blocks by two metallic strips (32), partly embedded in notches inside the block, and after being aligned by means of the headless graduation screws (22), the said walls are sealed with sealing paste.

The upper and lower parts of the bodies are connected by means of screws, specifically six screws (6) with a head, of which two are hidden from the outside by decorative side rings (10). The plastic casings (14, 15) that cover the aluminium upper parts of the bodies are connected to these by two screws (35), which are symmetrical and have two integral attachment rings on the outermost part of the unit.

The said casings (14, 15) are partly protected by two covers (12, 13), preferably made of plastic and well glued on, which have an ergonomic shape achieved by the formation of hollows in the form of fingerprints, and which conceal the screws (35, 22).

Obviously, many modifications and variations of the present invention are possible in view of the foregoing exposition. Consequently, it must be understood that, within the framework of the attached claims, the invention may be practically embodied in a different way to that which has been specifically described here.

## Claims

1. New ergonomic binoculars with zoom, comprising two bodies (14, 15) articulated therebetween by a central common axis and provided with a centered focussing wheel (11), a system to adjust the focussing being adjustable by rotating a drum (1), preferably the one located at the right side, and a zoom mechanism manually operated by a lever (5), characterized in that each of said bodies (14, 15) is made in cast aluminium, this confering to said bodies substantially improved stiffness, compactness and weight features, in that each of said bodies (14, 15) has been provided with a respective ergonomic covering (12, 13) partially extended to the external surface thereof, and in that the ergonomic design of said coverings include recessed tracks for the best holding of binoculars by the user.

2. New ergonomic binoculars with zoom according to claim 1, characterized in that also comprise small size objectives, mainly two 21-millimetre objectives.
